# EUROPEAN PATENT SPECIFICATION

(11) **EP 4 385 961 B1**
(45) Date of publication and mention of the grant of the patent: **24.09.2025**
(21) Application number: 22020613.0
(22) Date of filing: 14.12.2022
(51) Int. Cl.: C04B 7/04

(54) **METHOD OF PRODUCING CEMENT CLINKER FROM A SOURCE OF CALCIUM SULFATE**
VERFAHREN ZUR HERSTELLUNG VON ZEMENTKLINKER AUS EINER CALCIUMSULFATQUELLE
PROCÉDÉ DE FABRICATION DE CLINKER DE CIMENT À PARTIR D'UNE SOURCE DE SULFATE DE CALCIUM

(43) Date of publication of application: 19.06.2024
(73) Proprietor: Holcim Technology Ltd, 6300 Zug (CH)
(72) Inventor: Stoffel, Beat, CH-5113 Holderbank (CH); Seyler, Laurent, CH-5113 Holderbank (CH); Boes, Karl-Heinz, CH-5113 Holderbank (CH)
(74) Representative: SONN Patentanwälte GmbH & Co KG

(56) References cited:
- CN-A- 113 307 519
- US-A- 2 901 321
- US-B1- 6 391 107

## Description

The invention refers to a method of producing cement clinker from a source of calcium sulfate.

The production of Portland clinker is traditionally done by preparing a raw meal that comprises limestone and raw clays, and calcining this raw material in a rotary kiln at a temperature of around 1'450°C. During this calcination step, the calcium carbonate in the limestone decarbonates to form carbon dioxide and calcium oxide. Furthermore, the rotary kiln used for the production of Portland clinker is heated by a burner, which produces heat from burning carbon-containing materials, such as fuels and waste materials, which also produces carbon dioxide. These two processes run simultaneously in a Portland clinker manufacturing plant, and produce high amounts of carbon dioxide.

An alternative method of production of Portland clinker that does not require the use of calcium carbonate materials is based on the Müller Kühne (MK) process, wherein a source of calcium sulfates together with correctives used as the calcium providing material. In the MK-process calcium sulfate, for example in the form of gypsum, is reduced to calcium sulfite which reacts with calcium sulfate to give sulfur dioxide and calcium oxide, the latter being the main material to obtain cement clinker. The MK-process starts at temperatures of around 800°C and requires a source of carbon, which acts as a reducing agent. The calcium oxide resulting from the MK-process is further processed to obtain cement clinker.

US 2022/0204403 A1 discloses a method of producing cement and co-producing sulfuric acid from phosphogypsum.

EP 728713 B1 discloses a process where calcium sulfate materials are mixed with reactive carbon, and calcined at a first temperature of over 700°C so as to obtain calcium oxide, and the calcium oxide is then calcined at a temperature of over 1200°C in the presence of silica, alumina and iron oxide to obtain clinker. The SO₂ containing flue gas is then treated to be converted to SO₃ to produce sulfuric acid.

DE 19625538 B4 discloses a method of producing Portland cement and sulfuric acid by the MK-process, wherein waste gypsum board and other gypsum rubble are used as a source of calcium sulfate. The waste gypsum boards are pre-reduced to a uniform mill-processable edge length, sorted and freed from foreign materials such as wood, steel and plastic pieces, ground to powder fineness under throttled air suction, mixed with other cement starting material powder components and, after optional intermediate storage, processed in the rotary kiln to form cement clinker.

CN113307519 describes a method for producing cement and co-producing sulfuric acid. The method comprises a first step of desulfurizing the source of calcium sulfate to obtain calcium oxide and sulfur dioxide; the use of a sulfur plasma flow as a reducing agent for the decomposition of calcium sulfate is required.

In the known methods of producing cement based on the MK-process, silica, alumina and iron oxide are added to the process. These additional components are required in addition to the calcium oxide produced during the process so that the mixture that is further processed at high temperatures has an overall composition that is suitable for the production of Portland clinker.

The methods described above require the use of a reducing agent to produce calcium oxide from a source of calcium sulfate by desulfurizing the latter. Since a carbon source is usually used as a reducing agent, this desulfurization process creates carbon dioxide emissions, which adds complexity to the process and also increases costs, since measures have to be undertaken for sequestering carbon dioxide. Above all, carbon dioxide increases the carbon footprint of the cement clinker production.

Therefore, the instant invention aims at improving a method of producing cement clinker by overcoming the problems mentioned above and decreasing the carbon footprint.

In order to solve this and other objects, the invention provides a method of producing cement clinker from a source of calcium sulfate, comprising:
- a first step of desulfurizing the source of calcium sulfate in the absence of a reducing agent in a first reactor to obtain calcium oxide and sulfur dioxide and withdrawing the calcium oxide from the first reactor, and subsequently
- a second step of adding silica, alumina and iron oxide containing materials to the calcium oxide, or to a calcium hydroxide having formed by hydrating the calcium oxide, to obtain a raw material mixture and calcining the raw material mixture in a second rector to obtain cement clinker.

Thus, the invention is based on the idea to desulfurize the source of calcium sulfate without using a reducing agent, such as a carbon source. In this way, the process does not produce any carbon dioxide, thus contributing to a reduction of greenhouse gas emissions.

It has been found that desulfurizing can be carried out by thermally decomposing the source of calcium sulfate by applying a heat treatment at a temperature of > 2'000°C, preferably > 3'000°C to the source of calcium sulfate.

According to a particularly preferred embodiment, the heat treatment is applied by means of a plasma burner. Preferably, the plasma burner may operate continuously at a temperature of 2'000-5'000°C. It has been found that such high temperatures alone are sufficient to produce calcium oxide and sulfur dioxide from a source of calcium sulfate, wherein a preferred embodiment provides that the calcium sulfate feed passes the flame of the plasma burner directly.

Using a plasma burner has the additional advantage of suppressing the need of a fuel to be burnt, and reduces the amount of carbon dioxide emitted directly during the process.

The application of the high temperatures caused by a plasma burner lead to a thermal decomposition of CaSO₄ according to the following formula:

CaSO₄ -> CaO + SO₂ + 1/2 O₂

According to a preferred embodiment, the plasma burner is operated with carbon dioxide as a carrier gas. This has the advantage of a low O₂ pressure in the kiln atmosphere. Building of NOx can be avoided and the reformation of SO₃ (back reaction to CaSO₄) is suppressed.

When using carbon dioxide as a carrier gas, the off-gas from the first reactor will contain carbon dioxide in addition to sulfur dioxide. The carbon dioxide fraction of the off-gas may advantageously be recycled to the plasma burner and reused as a carrier gas. In this way, the desulfurization process is free of carbon dioxide emissions.

Preferably, the first step of desulfurizing the source of calcium sulfate in the first reactor is carried out in an atmosphere consisting mainly of CO₂ and SO₂ and a small percentage of oxygen. To avoid the reformation of SO₃ and later CaSO₄ the oxygen content should be as low as possible. Preferably, the oxygen content in the atmosphere of the first reactor is kept < 10 vol.%, preferably < 5 vol.%, in particular < 3 vol.-%.

Another aspect of the method according to the invention is that the desulfurization step and the calcination of the calcium oxide resulting from the desulfurization step are carried out in separate reactors. In this way, each step may be optimized with respect to its process conditions, including atmosphere and temperature. For example, the first reactor may be operated at a considerably higher temperature than would be required for the calcination process carried out in the second reactor. Further, the first step may be improved with regard to the proper separation of sulfur dioxide from the calcium oxide. In this way, less or no sulfate will be entrained into the second step and the resulting cement clinker will have a reduced saturation with sulfate. Further, the entrainment of any unreacted calcium sulfate into the second step may be reduced or eliminated, resulting in a cement having a lower content of calcium sulfate.

Since an optimal temperature may be adjusted for each of the first and second steps, the energy efficiency of the overall process is increased.

As the method according to the invention is carried out in two calcination steps, the calcium oxide resulting from the first step may hydrate, for example due to water vapor in the air, to partially form calcium hydroxide.

Another advantage of the two-step process of the invention is that calcium oxide is obtained as an intermediate product after the first step, so that at least a partial amount of the calcium oxide may be used for another purpose than the second step. For example, calcium oxide may be used for the mineralization of CO₂ or the capture of sulfates that could be emitted by the process.

Further, with the two-step process the generation of the intermediate product can be controlled very well, e.g. by controlling the sulfur content, the CaSO₄ retention time and the temperature, therefore a higher quality clinker may be achieved in the second step.

Also, the two steps of the process can be carried out at different geographical locations, considering the availability and/or the market for gypsum, sulfuric acid and the final clinker product. Furthermore, the calcium oxide produced after the first step can optionally be commercialized as is.

Since the additional materials needed in the raw material composition for the production of Portland clinker, namely silica, alumina and iron oxide, are added to the process only in the second step, the first step may be carried out without the presence of these additional materials. The second step may be optimized to calcine the raw material mixture in a suitable embodiment of the second rector to obtain cement clinker.

In a preferred embodiment, the sources of silica, alumina and iron oxide comprise recycled or waste materials. In a preferred embodiment, the sources of silica, alumina and iron oxide comprise at least 40 wt.-% of recycled or waste materials.

The recycled or waste materials can be selected from any of the following materials: mineral waste materials from construction and demolition such as concrete demolition waste, recycled aggregates, recycled bricks, coal ashes, or steel slags.

The use of waste and recycled materials decreases the environmental impact of this production process, by minimizing the need to use virgin materials.

As to the control of the temperature in the two steps of the method of the invention, a preferred embodiment provides that the calcination of the first step is carried out at a temperature of > 2'000°C, preferably > 3'000°C, and the calcination of the second step is carried out at a temperature of 1'340-1'450°C.

Various sources of calcium sulfate may be used as a starting material of the method of the invention. In particular, the source of calcium sulfate may be gypsum, anhydrite, hemihydrate, waste calcium sulfate and/or phosphogypsum, the latter being widely available as it is most often landfilled in large quantities, being a by-product of the production of phosphate-based fertilizers or phosphoric acid. Preferably, the source of calcium sulfate is free of carbon.

In order to maximize the surface to volume ratio of the calcium sulfate source, thereby enhancing the energy transfer from the plasma burner to the material, the source of calcium sulfate is preferably introduced into the first reactor in the form of a powder, preferably having a maximum particle size of 300 µm. Herein, the particle size is measured by sieving.

Considering that some sources of calcium sulfate have a high water content, a preferred embodiment of the invention provides that the source of calcium sulfate is dried (dehydrated) to a water content of < 2 wt.-%, preferably less < 1 wt.-%, before being introduced into the first reactor.

The sulfur dioxide contained in the off-gas of the first reactor is separated from other constituents, for example by a scrubber, to form sulfuric acid, which is a by-product of the present process that can be made further use of in other industrial applications.

The second reactor may preferably be designed as a rotary kiln. In particular, an existing rotary kiln of a cement manufacturing plant may be used.

The second reactor may be heated by burning various types of fuels. However, in order to reduce the carbon footprint of the process, a preferred embodiment provides that the step of calcining the raw material mixture in the second reactor is carried out by using at least one plasma burner. The at least one plasma burner can optionally be used in combination with other burners, such as a dihydrogen burner.

In order to prevent sulfur compounds obtained in the first step of the method of the invention from being entrained into the second step, the sulfur dioxide is separated from the calcium oxide, before the calcium oxide is fed to the second step.

As mentioned before, an advantage of the present invention is the greater flexibility as to the use of the calcium oxide obtained from the first step, since it is provided as a separate intermediate product. According to a first alternative, the calcium oxide coming from the first step is allowed to cool to ambient temperature, hydrate to partially form calcium hydroxide, and is stored before being used in the second step.

According to a second alternative, the calcium oxide is withdrawn from the first reactor at a first temperature and is introduced into the second reactor at a suitable temperature for allowing calcination. In particular, both reactors may operate in cascade to make sure that the materials entering the second reactor retain heat and avoid hydration of the calcium oxide so as to reduce the energy consumption of the second reactor.

Alternatively, the calcium oxide and the off-gasses withdrawn from the first reactor and the silica, alumina and iron oxide containing materials are introduced into a heat exchanger, wherein the sensible heat of the calcium oxide and of the off-gasses is used to preheat the silica, alumina and iron oxide containing materials in the heat exchanger. The preheated raw material mixture is then discharged from the heat exchanger and introduced into the second reactor. The off-gasses that haven been separated from the raw material mixture may be further processed, as described above.

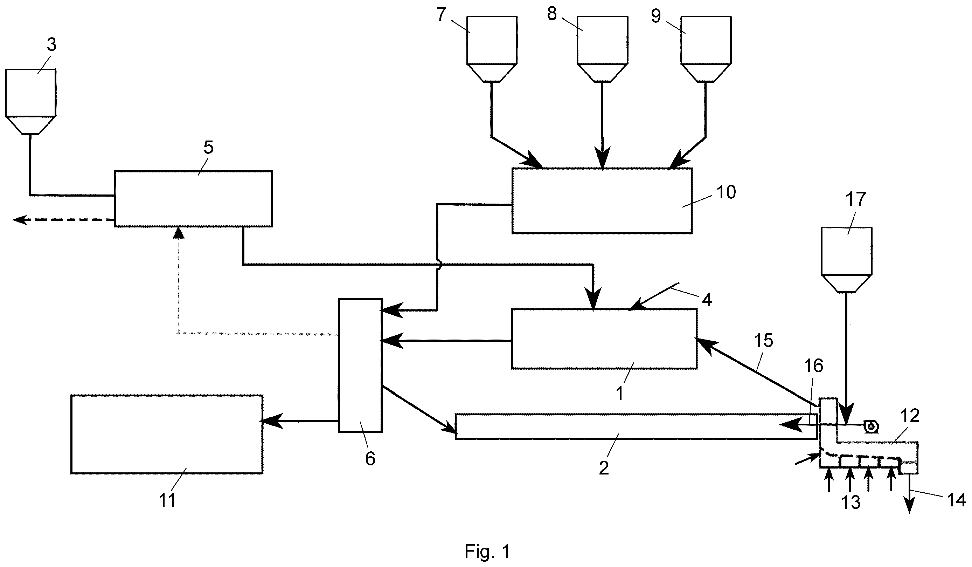

The invention will now be described by means of an exemplary embodiment illustrated in Fig. 1. The figure shows a first reactor 1 and a second reactor 2. The first reactor 1 is designed to desulfurize a source of calcium sulfate 3 by means of a plasma burner 4. The source of calcium sulfate 3 is first dehydrated in a dryer 5. The dehydrated calcium sulfate is introduced into the first reactor 1 and desulfurized by means of the plasma burner 4, in particular by passing a stream of pulverulent calcium sulfate through the flame of the plasma burner 4. Carbon dioxide may be used as a carrier gas for the plasma burner 4. The resulting mixture of calcium oxide, sulfur dioxide and carbon dioxide (the carrier gas) is withdrawn from the first reactor 1 and introduced into a heat exchanger 6.

A silica containing corrective material 7, an alumina containing corrective material 8 and iron oxide containing corrective material 9 are mixed in a mixer 10 and the mixture is added into the heat exchanger 6, where it is heated in heat exchange with the substances coming from the first reactor 1. The gaseous substances contained in the heat exchanger 6 are removed from the heat exchanger 6 separately from the solid substances. In doing so, gaseous sulfur dioxide and carbon dioxide are introduced into the gas conditioning and scrubbing unit 11, where the gases may be separated from each other. The carbon dioxide may be recycled to be used as a carrier gas for plasma burner 4.

The raw material mixture comprising calcium oxide and the corrective materials is introduced into the second reactor 2, which is designed as a rotary kiln, and is calcined in order to obtain cement clinker. The cement clinker leaving the second reactor 1 is cooled in a clinker cooler 12 in heat exchange with cooling air 13. The cooled clinker is extracted from the clinker cooler 12 at 14. The sensible heat of the cooling air leaving the clinker cooler 12 via line 15 may be used in the first reactor 1.

The second reactor is operated by a burner 16, in which fossil and/or alternative fuels 17 may be burned. Alternatively, the second reactor 2 can also be heated by means of a plasma burner.

## Claims

1. A method of producing cement clinker from a source of calcium sulfate, comprising:
- a first step of desulfurizing the source of calcium sulfate in the absence of a reducing agent in a first reactor to obtain calcium oxide and sulfur dioxide and withdrawing the calcium oxide from the first reactor, and subsequently
- a second step of adding silica, alumina and iron oxide containing materials to the calcium oxide, or to a calcium hydroxide having formed by hydrating the calcium oxide, to obtain a raw material mixture and calcining the raw material mixture in a second rector to obtain cement clinker.

2. Method according to claim 1, wherein the step of desulfurizing is carried out to produce calcium oxide which has a sulfur content of less than 0.1% by weight.

3. Method according to claim 1 or 2, wherein the step of desulfurizing is carried out by thermally decomposing the source of calcium sulfate by applying a heat treatment at a temperature of > 2'000°C, preferably > 3'000°C to the source of calcium sulfate.

4. Method according to claim 3, wherein the heat treatment is applied by means of a plasma burner, in which the source of calcium sulfate is preferably led through a plasma flame emitted by the plasma burner.

5. Method according to claim 5, wherein the plasma burner is operated with CO₂ as a carrier gas.

6. Method according to any one of claims 1 to 5, wherein CO₂ contained in an off-gas from the first reactor, said off-gas comprising sulfur dioxide and CO₂, is recycled to the plasma burner as a carrier gas.

7. Method according to any one of claims 1 to 6, wherein the calcination of the second step is carried out at a temperature of 1'340-1'450°C.

8. Method according to any one of claims 1 to 7, wherein the source of calcium sulfate is gypsum, anhydrite, hemihydrate, waste calcium sulfate and/or phosphogypsum.

9. Method according to any one of claims 1 to 8, wherein the source of calcium sulfate is introduced into the first reactor in the form of a powder, preferably having a maximum particle size of 300µm measured by sieving.

10. Method according to any one of claims 1 to 9, wherein the source of calcium sulfate is dried to a water content of < 2 wt.-% before being introduced into the first reactor.

11. Method according to any one of claims 1 to 10, wherein the second reactor is designed as a rotary kiln.

12. Method according to any one of claims 1 to 11, wherein the step of calcining the raw material mixture in the second reactor is carried out by using at least one plasma burner.

13. Method according to any one of claims 1 to 12, wherein the sulfur dioxide obtained in the first step is separated from the calcium oxide, before the calcium oxide is fed to the second step.

14. Method according to any one of claims 1 to 13, wherein the calcium oxide coming from the first step is allowed to cool to ambient temperature and is stored before being used in the second step.

15. Method according to any one of claims 1 to 14, wherein the silica, alumina and iron oxide containing materials comprise recycled or waste materials.

16. Method according to claim 15, wherein the recycled or waste materials are selected from any of the following materials: mineral waste materials from construction and demolition such as concrete demolition waste, recycled aggregates, recycled bricks, coal ashes, or steel slags.

## Patentansprüche

1. Verfahren zur Herstellung von Zementklinker aus einer Calciumsulfat-Quelle, umfassend:
- einen ersten Schritt der Entschwefelung der Calciumsulfat-quelle in Abwesenheit eines Reduktionsmittels in einem ersten Reaktor, um Calciumoxid und Schwefeldioxid zu erhalten, und Ausbringen des Calciumoxids aus dem ersten Reaktor, und anschließend
- einen zweiten Schritt der Zugabe von Siliziumdioxid, Tonerde und Eisenoxid enthaltenden Materialien zu dem Calciumoxid oder zu einem Calciumhydroxid, das durch Hydratisieren des Calciumoxids gebildet wurde, um eine Rohmaterialmischung zu erhalten, und Kalzinieren der Rohmaterialmischung in einem zweiten Reaktor, um Zementklinker zu erhalten.

2. Verfahren nach Anspruch 1, wobei der Schritt der Entschwefelung durchgeführt wird, um Calciumoxid herzustellen, das einen Schwefelanteil von weniger als 0,1 Gew.-% aufweist.

3. Verfahren nach Anspruch 1 oder 2, wobei der Schritt der Entschwefelung durch thermisches Zersetzen der Calciumsulfat-Quelle durch Anwendung einer Wärmebehandlung bei einer Temperatur von > 2000°C, bevorzugt > 3000°C, auf die Calciumsulfat-Quelle durchgeführt wird.

4. Verfahren nach Anspruch 3, wobei die Wärmebehandlung mittels eines Plasmabrenners durchgeführt wird, in dem die Calciumsulfat-Quelle bevorzugt durch eine vom Plasmabrenner emittierte Plasmaflamme geführt wird.

5. Verfahren nach Anspruch 5, wobei der Plasmabrenner mit CO₂ alsTrägergas betrieben wird.

6. Verfahren nach einem der Ansprüche 1 bis 5, wobei das in einem Abgas aus dem ersten Reaktor enthaltene CO₂, wobei das Abgas Schwefeldioxid und CO₂ umfasst, dem Plasmabrenner als Trägergas wieder zugeführt wird.

7. Verfahren nach einem der Ansprüche 1 bis 6, wobei die Kalzinierung des zweiten Schritts bei einer Temperatur von 1340-1450°C durchgeführt wird.

8. Verfahren nach einem der Ansprüche 1 bis 7, wobei die Calciumsulfat-Quelle Gips, Anhydrit, Hemihydrat, Calciumsulfatabfall und/oder Phosphorgips ist.

9. Verfahren nach einem der Ansprüche 1 bis 8, wobei die Calciumsulfat-Quelle in Form eines Pulvers in den ersten Reaktor eingebracht wird, das bevorzugt eine durch Sieben gemessene maximale Teilchengröße von 300 µm aufweist.

10. Verfahren nach einem der Ansprüche 1 bis 9, wobei die Calciumsulfat-Quelle auf einen Wassergehalt von < 2 Gew.-% getrocknet wird, bevor sie in den ersten Reaktor eingebracht wird.

11. Verfahren nach einem der Ansprüche 1 bis 10, wobei der zweite Reaktor als Drehrohrofen ausgebildet ist.

12. Verfahren nach einem der Ansprüche 1 bis 11, wobei der Schritt des Kalzinierens der Rohmaterialmischung im zweiten Reaktor unter Verwendung mindestens eines Plasmabrenners durchgeführt wird.

13. Verfahren nach einem der Ansprüche 1 bis 12, wobei das im ersten Schritt erhaltene Schwefeldioxid vom Calciumoxid abgetrennt wird, bevor das Calciumoxid dem zweiten Schritt zugeführt wird.

14. Verfahren nach einem der Ansprüche 1 bis 13, wobei das aus dem ersten Schritt stammende Kalziumoxid auf Umgebungstemperatur abkühlen gelassen und gelagert wird, bevor es im zweiten Schritt verwendet wird.

15. Verfahren nach einem der Ansprüche 1 bis 14, wobei die Siliziumdioxid, Tonerde und Eisenoxid enthaltenden Materialien rezyklierte oder Abfallmaterialien umfassen.

16. Verfahren nach Anspruch 15, wobei die rezyklierten Materialien oder Abfallstoffe aus einem der folgenden Materialien ausgewählt werden: mineralische Abfallstoffe aus dem Bau- und Abbruchbereich, wie Betonabbruch, rezyklierte Zuschlagstoffe, rezyklierte Ziegel, Kohleasche oder Stahlschlacken.

## Revendications

1. Un procédé de production de clinker de ciment à partir d'une source de sulfate de calcium, comprenant:
- une première étape de désulfuration de la source de sulfate de calcium en l'absence d'agent réducteur dans un premier réacteur pour obtenir de l'oxyde de calcium et du dioxyde de soufre et le retrait de l'oxyde de calcium du premier réacteur, et ensuite
- une seconde étape d'ajout de matériaux contenant de la silice, de l'alumine et de l'oxyde de fer à l'oxyde de calcium, ou à un hydroxyde de calcium formé par hydratation de l'oxyde de calcium, pour obtenir un mélange de matières premières et calciner le mélange de matières premières dans un second réacteur pour obtenir du clinker de ciment.

2. Procédé selon la revendication 1, dans lequel l'étape de désulfuration est réalisée pour produire de l'oxyde de calcium qui a une teneur en soufre inférieure à 0,1% en poids.

3. Procédé selon la revendication 1 ou 2, dans lequel l'étape de désulfuration est réalisée par décomposition thermique de la source de sulfate de calcium en appliquant un traitement thermique à une température de > 2'000°C, de préférence > 3'000°C à la source de sulfate de calcium.

4. Procédé selon la revendication 3, dans lequel le traitement thermique est appliqué au moyen d'un brûleur à plasma, dans lequel la source de sulfate de calcium est de préférence conduite à travers une flamme de plasma émise par le brûleur à plasma.

5. Procédé selon la revendication 4, dans lequel le brûleur à plasma est mis en œuvre avec du CO₂ comme gaz porteur.

6. Procédé selon l'une des revendications 1 à 5, dans lequel le CO₂ contenu dans un gaz d'échappement du premier réacteur, ledit gaz d'échappement comprenant du dioxyde de soufre et du CO, est recyclé vers le brûleur à plasma comme gaz porteur.

7. Procédé selon l'une des revendications 1 à 6, dans lequel la calcination de la seconde étape est réalisée à une température de 1'340-1'450°C.

8. Procédé selon l'une des revendications 1 à 7, dans lequel la source de sulfate de calcium est du gypse, de l'anhydrite, de l'hémihydrate, du sulfate de calcium de déchet et/ou du phospho-gypse.

9. Procédé selon l'une des revendications 1 à 8, dans lequel la source de sulfate de calcium est introduite dans le premier réacteur sous forme de poudre, de préférence ayant une taille de particule maximale de 300 um mesurée par tamisage.

10. Procédé selon l'une des revendications 1 à 9, dans lequel la source de sulfate de calcium est séchée à une teneur en eau de < 2% en poids avant d'être introduite dans le premier réacteur.

11. Procédé selon l'une des revendications 1 à 10, dans lequel le second réacteur est conçu comme un four rotatif.

12. Procédé selon l'une des revendications 1 à 11, dans lequel l'étape de calcination du mélange de matières premières dans le second réacteur est réalisée en utilisant au moins un brûleur à plasma.

13. Procédé selon l'une des revendications 1 à 12, dans lequel le dioxyde de soufre obtenu dans la première étape est séparé de l'oxyde de calcium, avant que l'oxyde de calcium ne soit introduit dans la seconde étape.

14. Procédé selon l'une des revendications 1 à 13, dans lequel l'oxyde de calcium provenant de la première étape est laissé refroidir à température ambiante et est stocké avant d'être utilisé dans la seconde étape.

15. Procédé selon l'une des revendications 1 à 14, dans lequel les matériaux contenant de la silice, de l'alumine et de l'oxyde de fer comprennent des matériaux recyclés ou des déchets.

16. Procédé selon la revendication 15, dans lequel les matériaux recyclés ou déchets sont sélectionnés parmi l'un quelconque des matériaux suivants: déchets minéraux de construction et de démolition tels que déchets de démolition de béton, agrégats recyclés, briques recyclées, cendres de charbon, ou scories d'acier.
